# EUROPÄISCHE PATENTSCHRIFT

(11) **EP 2 002 772 B1**
(45) Veröffentlichungstag und Bekanntmachung des Hinweises auf die Patenterteilung: **03.08.2011**
(21) Anmeldenummer: 08010814.5
(22) Anmeldetag: 13.06.2008
(51) Int. Cl.: A47J 43/25, B26D 3/28

(54) **Vorrichtung zum Schneiden von Obst, Gemüse oder dergleichen**
Device for cutting fruit, vegetables or similar
Dispositif de coupe de fruits, de légumes ou analogues

(30) Priorität: 15.06.2007 DE 102007027538
(43) Veröffentlichungstag der Anmeldung: 17.12.2008
(73) Patentinhaber: Schleinzer, Werner, 2361 Laxenburg (AT)
(72) Erfinder: Schleinzer, Werner, 2361 Laxenburg (AT)
(74) Vertreter: Vossius, Tilman

(56) Entgegenhaltungen:
- EP-A- 1 264 669
- EP-A- 1 330 341
- WO-A-2004/110706
- DE-A1- 3 700 013
- DE-U1- 29 612 341
- DE-U1-202005 006 819
- FR-A- 1 429 231
- GB-A- 2 088 201
- US-A- 2 405 056

## Beschreibung

### GEBIET DER ERFINDUNG

Die vorliegende Erfindung betrifft eine Vorrichtung zum Schneiden von Schneidgut, wie Obst, Gemüse oder dergleichen. Insbesondere betrifft die vorliegende Erfindung einen Küchenhobel mit einem Grundkörper, an dem ein Messer festgelegt ist, das an einer Kante einer Auslauffläche angeordnet ist.

### HINTERGRUND DER ERFINDUNG

Küchenhobel werden zum Schneiden von Schneidgut wie Obst, Gemüse etc. verwendet. Dabei wird der Küchenhobel in der Regel mit einer Hand gehalten oder auf einen Behälter, wie beispielsweise eine Schale, aufgesetzt.

Mit der anderen Hand wird das Schneidgut entweder direkt oder mittels eines separaten Halters, auch Fruchthalter genannt, in Längsrichtung über eine Führungsfläche und eine Auslauffläche des Küchenhobels hin- und herbewegt. Bei jedem Schneidhub von der Führungsfläche hin zur Auslauffläche wird über das Messer eine Scheibe von dem Schneidgut abgeschnitten und fällt durch einen Schlitz zwischen dem Messer und der Führungsfläche nach unten, beispielsweise in eine Schale.

Das Messer ist dabei generell quer zur Längserstreckung des Grundkörpers ausgerichtet. Dabei kann das Messer rechtwinklig zur Längsachse des Grundkörpers ausgerichtet sein oder schräg hierzu. Ferner sind Küchenhobel bekannt, bei denen das Messer in Schneidrichtung V-förmig zuläuft, wie dies beispielsweise in EP 1 330 341, EP 1 264 669, EP 1 633 536 und DE 10 2004 038 815 beschrieben wird.

Diese bekannten Vorrichtungen bestehen aus einem Grundkörper und einem Einsatz, der die Führungsfläche des Küchenhobels ausbildet. Der auswechselbare Einsatz kann zur Schnittstärkenverstellung aus dem Grundkörper herausgenommen und um 180 gedreht wieder eingesetzt werden. Ferner können auch Einsätze unterschiedlicher Art verwendet werden, beispielsweise solche mit einer Reihe von hochstehenden Messern, die das Schneidgut bei einem Schneidhub vertikal anschneiden. Wenn bei dem darauf folgenden Schneidhub das Schneidgut um 90 gedreht wird, können folglich Würfel anstelle von Scheiben erzeugt werden.

Aus der vorstehend erwähnten EP 1 330 341 ist ein Küchenhobel bekannt, bei dem der Einsatz an dem Grundkörper insgesamt verschiebbar gelagert ist. Dabei kann erreicht werden, dass durch einen Längsversatz des Einsatzes in Bezug auf den Grundkörper die Schnitthöhe verstellt wird. Durch Verwendung von Rampen oder ähnlichem kann gewährleistet werden, dass die Führungsfläche in allen Positionen etwa parallel zu der Auslauffläche und damit zu dem Messer angeordnet ist.

Aus der EP 1 330 341 ist es ferner bekannt, den Einsatz in einer Sicherheitsposition so zu positionieren, dass eine Stirnseite des Einsatzes benachbart zu dem Messer angeordnet ist, und zwar so, dass die Führungsfläche auf der Höhe des Messers oder darüber liegt.

Hierdurch wird erreicht, dass das in der Regel sehr scharfe Messer durch die Stirnseite des Einsatzes abgedeckt ist. Demzufolge kann in der Sicherheitsposition generell vermieden werden, dass ein Benutzer unbeabsichtigt die Messerschneide berührt. Dies gilt insbesondere für Kinder, die sich der Schärfe des Messers häufig nicht bewusst sind. Demzufolge können Unfälle vermieden werden.

Der Einsatz liegt in der Sicherheitsposition auf einer Auflageplatte des Grundkörpers auf, so dass im Wesentlichen vermieden werden kann, dass der Einsatz gegenüber dem Messer nach unten in Richtung hin zur Auflageplatte abgebogen wird. Demzufolge können Verletzungen auch dann vermieden werden, wenn versehentlich ein Druck von oben auf den Einsatz im Bereich des Messers ausgeübt wird.

Aufgabe der vorliegenden Erfindung ist es, den in der EP 1 330 341 beschriebenen Küchenhobel zu verbessern. Ferner ist die Aufgabe der vorliegenden Erfindung einen verbesserten Einsatz, einen verbesserten Fruchthalter und eine Einsatzablagevorrichtung für einen derartigen Küchenhobel bereitzustellen.

### ZUSAMMENFASSUNG DER ERFINDUNG

Diese Aufgabe wird durch einen Küchenhobel gemäß Anspruch 1 gelöst.

Weitere vorteilhafte Ausgestaltungen sind in den Unteransprüchen definiert.

### KURZE BESCHREIBUNG DER ZEICHNUNGEN

Die folgenden Figuren stellen bevorzugte Ausführungsbeispiele eines erfindungsgemäßen Küchenhobels, mehrerer Einsätze, eines Fruchthalters und einer Ablagevorrichtung für die Verwendung mit einem derartigen Küchenhobel dar und dienen der Verdeutlichung der Erfindung.
Figur 1a zeigt eine perspektivische Ansicht des erfindungsgemäßen Küchenhobels von schräg oben, wobei ein er Einsatz in den Küchenhobel eingesetzt ist.
Figur 1b zeigt eine perspektivische Ansicht des erfindungsgemäßen Küchenhobels von schräg unten ohne Einsatz.
Figur 1c zeigt eine Draufsicht des erfindungsgemäßen Küchenhobels, wobei der Einsatz in den Küchenhobel eingesetzt ist.
Figur 1d zeigt eine Ansicht des erfindungsgemäßen Küchenhobels von unten ohne Einsatz.
Figur 2a zeigt eine perspektivische Ansicht des Einsatzes von schräg oben.
Figur 2b zeigt eine perspektivische Ansicht des Einsatzes von schräg unten.
Figur 2c zeigt eine Seitenansicht des Einsatzes.
Figur 2d zeigt eine Draufsicht des Einsatzes.
Figur 2e zeigt eine Ansicht des Einsatzes von unten.
Figur 3a zeigt eine perspektivische Ansicht eines zweiten Einsatzes von schräg oben, der mit dem erfindungsgemäßen Küchenhobel verwendet werden kann.
Figur 3b zeigt eine perspektivische Ansicht des zweiten Einsatzes von schräg unten.
Figur 3c zeigt eine Seitenansicht des zweiten Einsatzes.
Figur 3d zeigt eine Draufsicht des zweiten Einsatzes.
Figur 3e zeigt eine Draufsicht des erfindungsgemäßen Küchenhobels, wobei der zweite Einsatz in den Küchenhobel eingesetzt ist.
Figur 4a zeigt eine perspektivische Ansicht eines dritten Einsatzes von schräg oben, der mit dem erfindungsgemäßen Küchenhobel verwendet werden kann.
Figur 4b zeigt eine perspektivische Ansicht des dritten Einsatzes von schräg unten.
Figur 4c zeigt eine Seitenansicht des dritten Einsatzes.
Figur 4d zeigt eine Ansicht des dritten Einsatzes von unten.
Figur 4e zeigt eine perspektivische Detailansicht des erfindungsgemäßen Küchenhobels und des in diesen eingesetzten dritten Einsatzes.
Figur 5a zeigt eine perspektivische Ansicht eines Fruchthalters für die Verwendung mit dem erfindungsgemäßen Küchenhobel von schräg oben.
Figur 5b zeigt eine perspektivische Ansicht des Fruchthalters für die Verwendung mit dem erfindungsgemäßen Küchenhobel von schräg unten.
Figur 6a zeigt eine perspektivische Ansicht einer Ablagevorrichtung für die Aufnahme von Einsätzen von schräg oben.
Figur 6b zeigt eine Seitenansicht der Ablagevorrichtung für die Aufnahme von Einsätzen, wobei mehrere Einsätze in der Ablagevorrichtung aufgenommen sind.

### DETAILLIERTE BESCHREIBUNG DER BEVORZUGTEN AUSFÜHRUNGSFORM

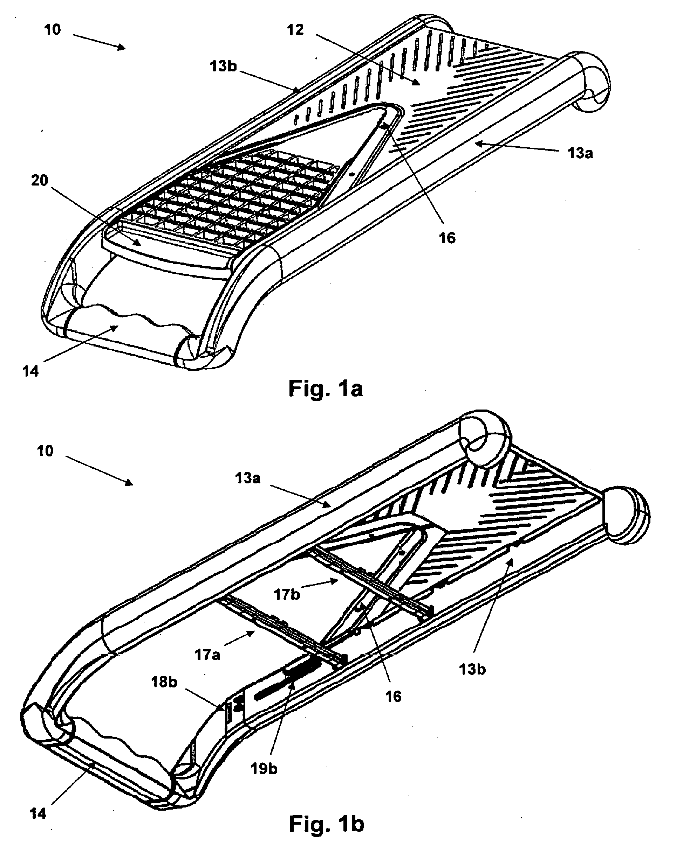

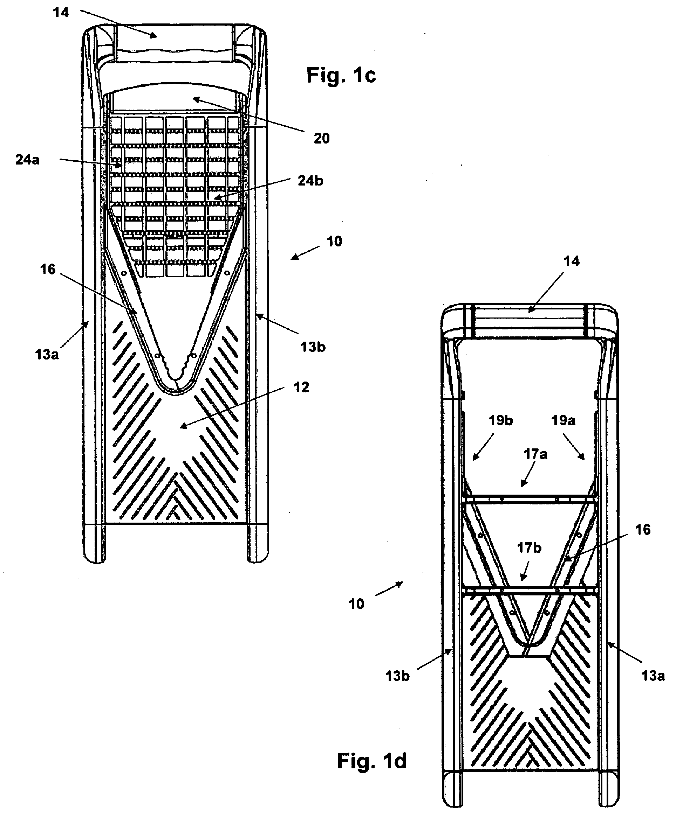

Die Figuren 1a bis 1d zeigen einen Küchenhobel 10 gemäß einer bevorzugten Ausführungsform der Erfindung, wobei in den Figuren 1a und 1c ein erster erfindungsgemäßer Einsatz 20 in den Küchenhobel 10 eingesetzt ist. Der Küchenhobel 10 besteht im Wesentlichen aus einem Grundkörper mit einer Basisplatte 12, deren Oberseite eine Auslauffläche bildet.

An den seitlichen Rändern der Basisplatte 12 ist jeweils ein Längsträger 13a, 13b angebracht, die dem Küchenhobel 10 eine größere Stabilität verleihen. Zwischen diesen Längsträgern 13a, 13b ist am oberen Ende des Küchenhobels 10 ein Griff 14 ausgebildet, der es einem Benutzer ohne weiteres ermöglicht, den Küchenhobel 10 geeignet zu positionieren und beim Schneiden von Gemüse oder Obst zu halten. Wie sich dies insbesondere Figur 1b entnehmen lässt, sind die Enden der Längsträger 13a, 13b am unteren Ende des Küchenhobels 10 nach unten gebogen.

Neben einer Verbindung über die Basisplatte 12 sowie den Griff 14 sind die Längsträger 13a, 13b über zwei Querstege 17a und 17b miteinander verbunden, wie sich dies insbesondere den Figuren 1b und 1d entnehmen lässt. Diese Querstege 17a und 17b dienen zum einen einer Stabilisierung des Küchenhobels 10 und zum anderen als Auflagefläche und als Führung für in den Küchenhobel 10 einzusetzende Einsätze, wie dies nachstehend ausführlicher beschrieben wird. Hierzu weisen die beiden Querstege 17a und 17b jeweils ungefähr in der Mitte zwei zentrale, nach oben abstehende Nasen auf, die zwischen sich eine Lücke ausbilden, wie sich dies insbesondere der Figur 1b entnehmen lässt.

Am vorderen Ende der durch die Basisplatte 12 ausgebildeten Auslauffläche ist ein aus zwei Einzelmessern zusammengesetztes V-Messer 16 angeordnet ist. Dabei ist die Auslauffläche bündig mit der Oberseite des V-Messers 16 ausgerichtet.

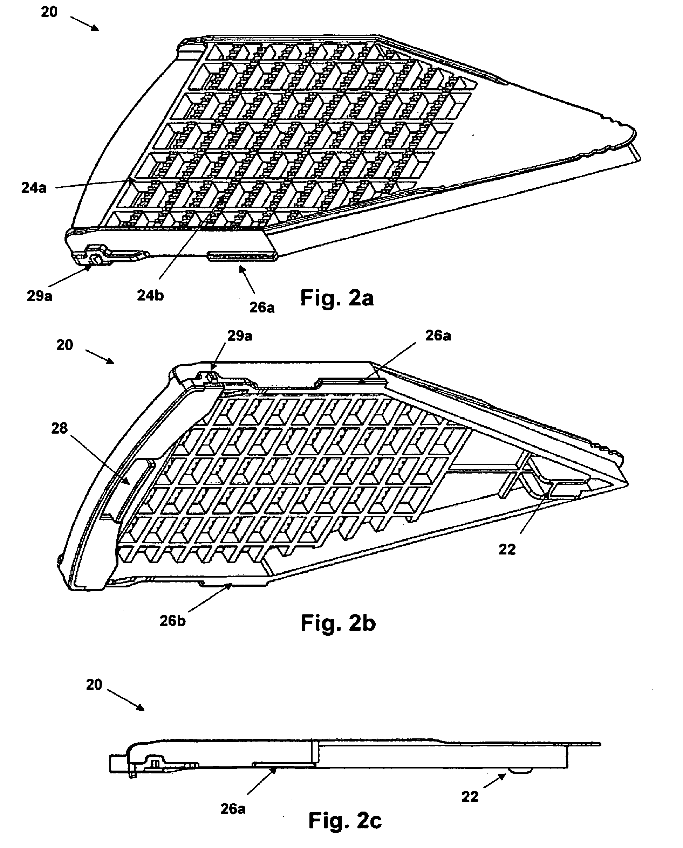

In den Figuren 1a und 1c ist ein erster Einsatz 20 in den Kückenhobel 10 eingesetzt. Dieser erste Einsatz 20 ist separat noch einmal in den Figuren 2a bis 2e detaillierter dargestellt. Wie sich dies aus diesen Figuren und insbesondere der nachstehenden Beschreibung ergibt, ist der erste Einsatz 20 derart ausgestaltet, dass dieser im eingesetzten Zustand zwei Funktionen erfüllt.

Zum einen ist im eingesetzten Zustand eine Stirnseite des Einsatzes 20 derart benachbart zu dem V-Messer 16 angeordnet ist, dass die durch die Oberseite des Einsatzes 20 ausgebildete Führungsfläche über der Höhe des V-Messers 16 liegt (siehe Figur 1a und 1c). Hierdurch wird erreicht, dass das sehr scharfe Messer durch die Stirnseite des Einsatzes 20 abgedeckt ist. Demzufolge kann in dieser Sicherheitsposition generell vermieden werden, dass ein Benutzer unbeabsichtigt die Messerschneide berührt. Dies gilt insbesondere für Kinder, die sich der Schärfe des Messers häufig nicht bewusst sind. Demzufolge können Unfälle vermieden werden.

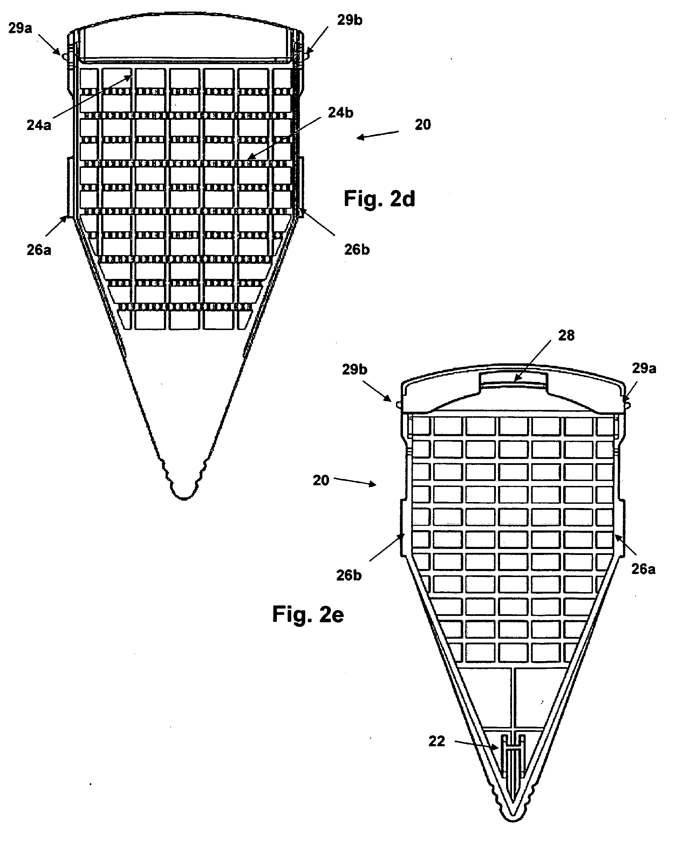

Der Einsatz 20 liegt in der Sicherheitsposition vermittels eines Vorsprungs 22 (siehe Figuren 2b, 2d und 2e) auf den zentralen Nasen des Querstegs 17b auf. Aufgrund dieser anstoßenden Beziehung zwischen dem Vorsprung 22 des Einsatzes 20 und den zentralen Nasen des Querstegs 17b des Küchenhobels 10 kann im Wesentlichen vermieden werden, dass der Einsatz 20 gegenüber dem V-Messer 16 nach unten in Richtung hin zu dem Quersteg 17b abgebogen wird.

Neben der Funktion als Sicherheitseinsatz dient der erste Einsatz 20 ferner als Küchenreibe. Hierzu ist der Mittelteil des Einsatzes 20 im Wesentlichen aus einer Vielzahl von jeweils senkrecht zueinander verlaufenden Längs- und Querstreben (z.B. Längsstrebe 24a und Querstrebe 24b) ausgebildet, die wiederum jeweils eine entsprechende Vielzahl von Löchern in dem Einsatz 20 ausbilden, wie sich dies insbesondere den Figuren 2c und 2d entnehmen lässt. Die Figuren 2a und 2c zeigen, dass beispielsweise die Querstreben eine Vielzahl von kleinen, jeweils über die Breite der Querstreben verlaufende Vorsprünge aufweisen. Diese Vielzahl von Vorsprüngen bildet die Reibefläche des Einsatzes 20 aus. Mit anderen Worten, ein Reibgut, wie beispielsweise ein Hartkäse, das in Längsrichtung entlang dem in den Küchenhobel 10 eingesetzten ersten Einsatz 20 bewegt wird, wird von den Vorsprüngen abgerieben und fällt aufgrund der Schwerkraft durch die Löcher in einen sich unter dem Küchenhobel 10 befindlichen Behälter, wie beispielsweise eine Schale.

Bei einer derartigen Verwendung des Küchenhobels 10 mit dem ersten Einsatz 20 als Reibe, bei der das Reibgut im Wesentlichen in Längsrichtung des Küchenhobels 10 entlang des ersten Einsatzes 20 bewegt wird, wird der erste Einsatz 20 einer Kraft in Längsrichtung des Küchenhobels 10 ausgesetzt. Um sicherzustellen, dass sich der erste erfindungsgemäße Einsatz 20 zum einen nicht in Richtung der Basisplatte 12 bzw. der Auslauffläche und dem V-Messer 16 bewegt, was zu einer Berührung und somit einer Beschädigung des V-Messers 16 führen könnte, und zum anderen nicht in Richtung des Griffes 14, d.h. aus dem Küchenhobel 10 heraus, bewegt, weisen der erfindungsgemäße Küchenhobel 10 und der erste Einsatz 20 die nachstehend beschriebenen weiteren Merkmale auf.

Wie sich dies den Figuren 2a bis 2e entnehmen lässt, weist der erste Einsatz 20 an seinen beiden Seiten jeweils eine längliche Führungsnut 26a, 26b auf. Diese Führungsnuten 26a, 26b werden beim Einbringen des ersten Einsatzes 20 in den Küchenhobel 10 in entsprechende Führungsfedem 19a, 19b eingeführt, wie dies in den Figuren 1b, 1d und insbesondere 4d dargestellt ist. Diese Führungsfedern 19a, 19b sind an den Innenseiten der Längsträger 13a, 13b derart ausgebildet, dass der erste Einsatz 20 mit seinen Führungsnuten 26a, 26b schmiegsam nur soweit in die Führungsfedern 19a, 19b eingebracht werden kann, dass zwar die Oberseite des Einsatzes 20 das V-Messer 16 abdeckt, der Rest des Einsatzes 20 jedoch das V-Messer 16 und insbesondere dessen Klingen nicht berühren kann. Hierzu enden die Führungsfedern 19a, 19b an ihrem unteren Ende jeweils in einem Stopperelement, beispielsweise in Form eines Querstegs, an den die vorderen Enden der Führungsnuten 26a, 26b anstoßen, wenn der erste Einsatz 20 vollständig in den Küchenhobel 10 eingebracht ist. Der Fachmann erkennt somit, dass das Zusammenwirken der Führungsnuten 26a, 26b des ersten Einsatzes 20 mit den an den Innenseiten der Längsträger 13a, 13b des Küchenhobels 10 angebrachten Führungsfedern 19a, 19b zum einen dazu dient, das Einbringen des ersten Einsatzes 20 in den Küchenhobel 10 zu führen, und zum anderen, insbesondere mittels des Stopperelements, dazu dient, eine Bewegung des ersten Einsatzes 20 in Richtung des V-Messers 16 über die Einsatzposition hinaus zu vermeiden.

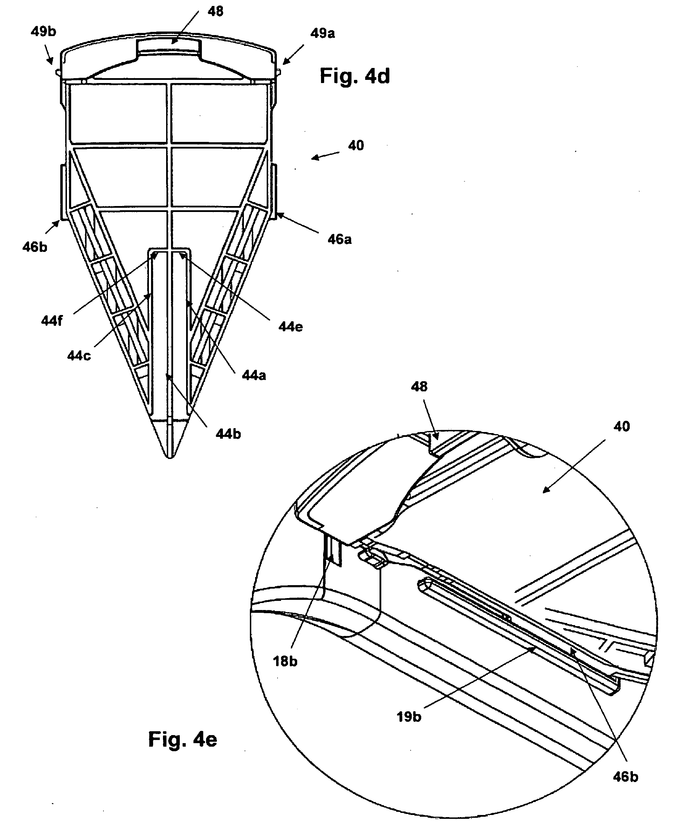

Wie sich dies wiederum den Figuren 2a bis 2e entnehmen lässt, weist der erste Einsatz 20 an seinem hinteren Ende eine Verriegelungseinrichtung zum Arretieren bzw. Verriegeln des vollständig in den Küchenhobel eingesetzten ersten Einsatzes 20 auf. Diese Verriegelungseinrichtung kann beispielsweise im Wesentlichen aus einem mittleren Löseelement 28 und zwei seitlichen Arretierungsstiften 29a, 29b bestehen. Die Verriegelungseinrichtung ist derart vorgespannt, beispielsweise mittels Federn, dass sich die seitlichen Arretierungsstifte 29a, 29b in ihrer ausgefahrenen Position befinden. In dieser ausgefahrenen Position der seitlichen Arretierungsstifte 29a, 29b ist der Abstand zwischen den äußeren Enden der zwei Arretierungsstifte 29a, 29b ein wenig größer als der Abstand zwischen den Innenseiten der Längsträger 13a, 13b des Küchehobels 10, und zwar insbesondere in dem Bereich, in dem der erste Einsatz 20 zwischen den Innenseiten der beiden Längsträger 13a, 13b in den Kückenhobel 10 eingebracht wird. Dies führt dazu, dass beim Einbringen des Einsatzes 20 in den Küchenhobel 10, sobald die Arretierungsstifte 29a, 29b jeweils in Berührung mit den Innenseiten der Längsträger 13a, 13b des Küchenhobels 10 kommen, die Arretierungsstifte 29a, 29b zunächst gegen die Vorspannkraft der Verriegelungseinrichtung nach innen gedrückt werden. Wie sich dies jedoch der Figur 1b und insbesondere der Figur 4d entnehmen lässt, sind in den Innenseiten der Längsträger 13a, 13b jeweils im Wesentlichen rechteckige Aussparungen 18a, 18b vorgesehen (wobei in den Figuren 1b und 4d nur die Aussparung 18b zu sehen ist), in die die Arretierungsstifte 29a, 29b aufgrund der Vorspannkraft der Verriegelungseinrichtung einschnappen können, nachdem der erste Einsatz 20 vollständig in den Küchenhobel 10 eingebracht worden ist. Soll der erste Einsatz 20 aus dieser "Einschnappposition" dem Küchenhobel 10 wieder entnommen werden, um beispielsweise den ersten Einsatz 20 durch einen der nachstehend beschriebenen weiteren Einsätze 30, 40 zu ersetzen, betätigt der Anwender den Löseelement 28, d.h. zieht diesen gegen die Vorspannkraft der Federn nach hinten, und bewegt somit die Arretierungsstifte 29a, 29b in ihre eingefahrene Position, so dass der erste Einsatz 20 ohne weiteres in Richtung des Griffes 14 aus dem Küchenhobel 10 herausgezogen werden kann. Dabei wird diese Bewegung des Herausnehmens des ersten Einsatzes 20 aus dem Küchenhobel 10 anfänglich wiederum durch die mit den Führungsfedern 19a, 19b zusammenwirkenden Führungsnuten 26a, 26b geeignet geführt.

Der Fachmann wird erkennen, dass die vorstehend beschriebene Einschnappposition des ersten Einsatzes 20 in dem Küchenhobel 10 vorzugsweise der ebenfalls vorstehend beschriebenen Position entspricht, in der die vorderen Enden der Führungsnuten 26a, 26b an den jeweiligen Stopperelement der Führungsfedem 19a, 19b anstoßen. Mittels dieser Ausgestaltung ist der erste Einsatz 20 im eingesetzten und verriegelten Zustand zweifach gegen eine Verschiebung in der Längsrichtung des Küchenhobels 10 gesichert, nämlich zum einen durch die in die Aussparungen 18a, 18b eingeschnappten Arretierungsstifte 29a, 29b und zum anderen durch die anstoßende Beziehung zwischen den vorderen Enden der Führungsnuten 26a, 26b des ersten Einsatzes 20 und den Stopperelementen der Führungsfedern 19a, 19b.

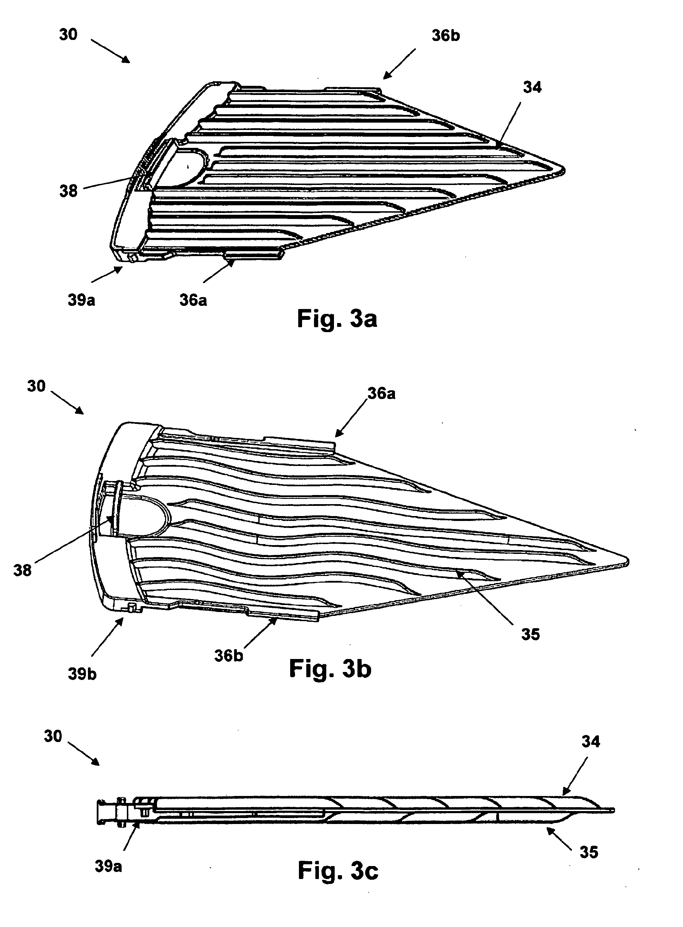

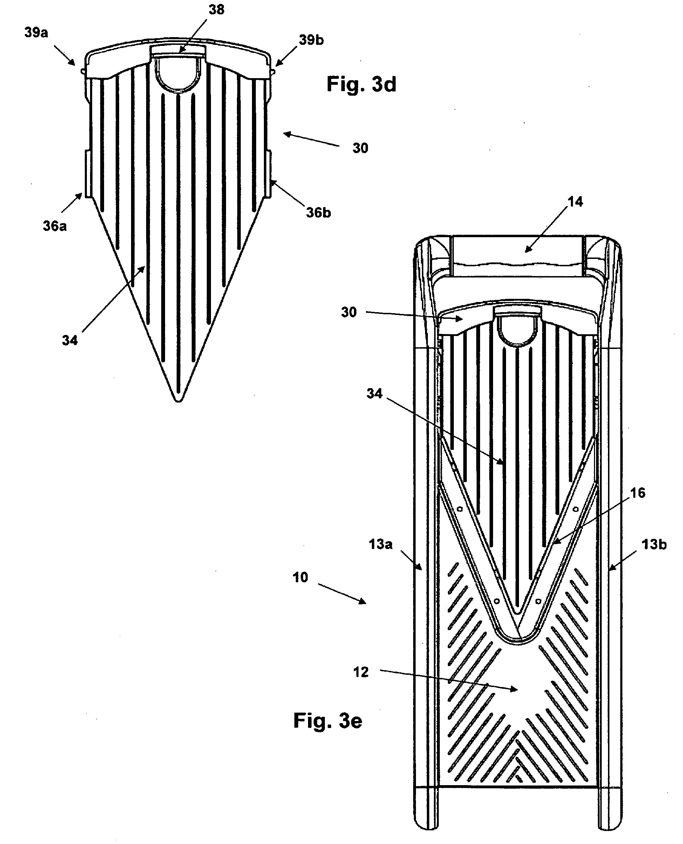

In den Figuren 3a bis 3d ist ein zweiter Einsatz 30 dargestellt, der für die Verwendung mit dem erfindungsgemäßen Küchenhobel 10 geeignet ist (siehe Figur 3e). Wie der erste Einsatz 20 weist auch der zweite Einsatz 30 sowohl seitliche Führungsnuten 36a, 36b als auch eine Verriegelungseinrichtung mit Arretierungsstiften 39a, 39b und einem Löseelement 38 auf, die genauso wie die vorstehend beschriebenen Führungsnuten 26a, 26b und Arretierungsstifte 29a, 29b des ersten Einsatzes 20 mit den Führungsfedern 19a, 19b bzw. den Aussparungen 18a, 18b an den Innenseiten der Längsträger 13a, 13b des Küchenhobels 10 zusammenwirken können.

Bei der Verwendung des Küchenhobels 10 mit dem zweiten Einsatz 30 (siehe Figur 3e) wird ein Schneidgut, wie beispielsweise eine Gurke, in einer Führungsrichtung etwa parallel zur Längsachse des Küchenhobels 10 hin- und herbewegt. Beim Bewegen des Schneidgutes von der durch den zweiten Einsatz 30 ausgebildeten Führungsfläche an dem V-Messer 16 vorbei in Richtung zur Auslauffläche wird eine Scheibe von dem Schneidgut abgeschnitten. Die abgeschnittene Scheibe fällt durch den Zwischenraum zwischen dem V-Messer 16 und dem zweiten Einsatz 30 nach unten, und zwar üblicherweise in einen darunter liegenden Behälter (nicht dargestellt).

Bei einer anschließenden Rückbewegung zum oberen Ende des Küchenhobels 10 zurück wird der Rest des Schneidguts über das V-Messer 16 bewegt, ohne dass ein Schneidvorgang erfolgt. Bei der nächsten Bewegung des Schneidgutes in Führungsrichtung wird wiederum eine Scheibe abgeschnitten.

Zum Verändern der Schnittstärke wird der zweite Einsatz 30 aus dem Küchenhobel 10 herausgenommen und um 180 Grad gedreht wieder in den Küchenhobel 10 eingesetzt. Hierzu weisen die auf der Oberseite des zweiten Einsatzes 30 ausgebildeten linienförmigen Erhebungen 34 eine gröβere Höhe als die auf der Unterseite des zweiten Einsatzes 30 ausgebildeten teilweise schlangenlinienförmigen Erhebungen 35 auf. In dem in Figur 3e dargestellten Zustand, bei dem die linienförmigen Erhebungen 34 auf der Oberseite des zweiten Einsatzes 30 die Führungsfläche ausbilden, liegen vorzugsweise die zwei mittleren Erhebungen der teilweise schlangenlinienförmigen Erhebungen 35 jeweils auf den zentralen, nach oben abstehenden Nasen der Querstege 17a, 17b des Küchenhobels 10 auf. Wenn die teilweise schlangenlinienförmigen Erhebungen 35 auf der Unterseite des zweiten Einsatzes 30 die Führungsfläche ausbilden, d.h. wenn der zweite Einsatz 30 im Vergleich zu Figur 3e in einer um 180 Grad gedrehten Orientierung in den Küchenhobel 10 eingesetzt ist, dann liegen vorzugsweise die linienförmigen Erhebungen 34 auf den Querstreben 17a, 17b auf, wobei die mittlere Erhebung der linienförmigen Erhebungen 34 jeweils durch die Lücke zwischen den zwei zentralen, nach oben abstehenden Nasen der Querstege 17a, 17b des Küchenhobels 10 verläuft. Somit ist gewährleistet, dass sich in beiden vorstehend beschriebenen Orientierungen des zweiten Einsatzes 30 im Küchenhobel 10 der zweite Einsatz 30 in einer anstoßenden Beziehung mit den Querträgern 17a, 17b bzw. den auf diesen ausgebildeten Nasen befindet, was einer von einem Schneidgut auf den zweiten Einsatz 30 in Richtung der Querstege 17a, 17b aufgebrachten Kraft entgegen wirkt.

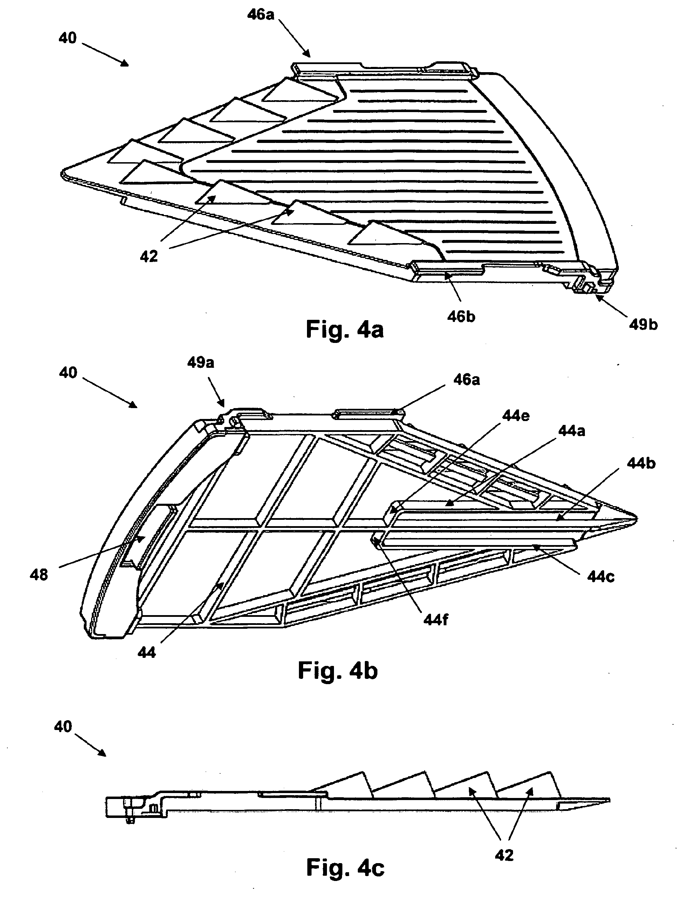

In den Figuren 4a bis 4d ist ein dritter Einsatz 40 dargestellt, der für die Verwendung mit dem erfindungsgemäßen Küchenhobel 10 geeignet ist. Wie der erste Einsatz 20 und der zweite Einsatz 30 weist auch der dritte Einsatz 40 sowohl seitliche Führungsnuten 46a, 46b als auch eine Verriegelungseinrichtung mit Arretierungsstiften 49a, 49b und einem Löseelement 48 auf, die genauso wie die vorstehend beschriebenen Führungsnuten 26a, 26b und Arretierungsstifte 29a, 29b des ersten Einsatzes mit den Führungsfedern 19a, 19b bzw. den Aussparungen 18a, 18b an den Innenseiten der Längsträger 13a, 13b des Küchenhobels 10 zusammenwirken können.

Der dritte Einsatz 40 ist insbesondere für die Herstellung von Streifen oder Würfeln mit einer Breite von ca. 1 cm ausgestaltet. Hierzu sind auf der Oberseite des dritten Einsatzes 40 acht im Wesentlichen dreieckige, nach oben abstehende Messer 42 mit einem seitlichen Abstand von 1 cm angeordnet, wie sich dies den Figuren 4a und 4c entnehmen lässt. Bei der Verwendung des Küchenhobels 10 mit dem dritten Einsatz 40 schneiden sowohl die hochstehenden Messer 42 des dritten Einsatzes 40 als auch das V-Messer 16 des Küchenhobels 10 das Schneidgut bei einem Schneidhub.

Wie sich dies den Figuren 4b und 4d entnehmen lässt, weist der dritte Einsatz 40 auf seiner Unterseite eine Vielzahl von quer, längs und diagonal verlaufenden Streben 44 auf. Diese Streben 44 sind derart ausgestaltet und weisen insbesondere eine solche Höhe auf, dass im eingesetzten Zustand des dritten Einsatzes 40 in dem Küchenhobel 10 die quer, längs und diagonal verlaufenden Streben 44 auf den zwei Querstreben 17a und 17b des Küchenhobels 10 zum Aufliegen kommen. Ferner befinden sich die zentralen, nach oben abstehenden Nasen der Querstege 17a, 17b des Küchenhobels 10 in Ineingriffnahme und in anstoßender Berührung mit zwei Aussparungen, die durch drei zentrale, längs verlaufende Streben 44a, 44b, 44c und zwei zentrale, quer verlaufende Streben 44e, 44f der quer, längs und diagonal verlaufenden Streben 44 ausgebildet werden. Diese Anordnung von Streben 44a, 44b, 44c, 44e und 44f bzw. die durch diese Streben 44a, 44b, 44c, 44e und 44f im dritten Einsatz 40 ausgebildeten Aussparungen weisen ferner die Funktionen auf, den dritten Einsatz 40 beim Einbringen in den Küchenhobel 10 aufgrund des Zusammenwirkens der zentralen, nach oben abstehenden Nasen der Querstege 17a, 17b mit den durch die Streben 44a, 44b, 44c, 44e und 44f im dritten Einsatz 40 ausgebildeten Aussparungen zu führen und den dritten Einsatz 40 gegenüber einer Bewegung über die Einrastposition hinaus zu sichern, und zwar durch die anstoßende Beziehung zwischen den zwei, zentralen, nach oben abstehenden Nasen des "hinteren" Querstegs 17a mit den zwei zentralen, quer verlaufenden Streben 44e, 44f der quer, längs und diagonal verlaufenden Streben 44 auf der Unterseite des dritten Einsatzes 40.

Figur 4e zeigt eine Detailansicht des in den Küchenhobel 10 eingesetzten dritten Einsatzes 40. Da bereits vorstehend ausführlich das Zusammenwirken des ersten Einsatzes 20 mit dem Küchenhobel 10 unter Bezugnahme auch auf Figur 4 beschrieben worden ist, wird an dieser Stelle nicht detaillierter auf das Zusammenwirken des dritten Einsatzes 40 mit dem Küchenhobel 10 eingegangen.

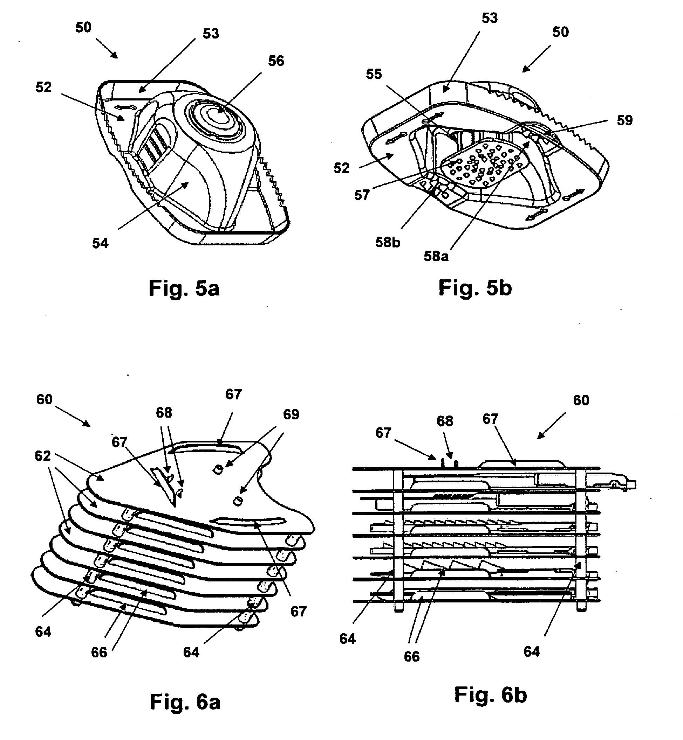

In den Figuren 5a und 5b ist ein Fruchthalter 50 für die Verwendung mit dem erfindungsgemäßen Küchenhobel 10 dargestellt. Der Fruchthalten 50 besteht aus einem im Wesentlichen ebenen Bodenabschnitt 52, einem von dessen Umfang nach oben abstehenden Randabschnitt 53 sowie einer sich über dem ebenen Bodenabschnitt 52 wölbenden halbkugelförmigen Kuppel 54. Die halbkugelförmige Kuppel 54 bildet im Wesentlichen die Grifffläche für die Finger bzw. die Hand eines Benutzers aus, der den Fruchthalter 50 benutzt. Ein gleitbar verschiebbarer Stempel 56 ist durch eine kreisförmige Öffnung in der Mitte der Kuppel 54 geführt und weist an seinem oberen Enden einen Flansch und an seinem unteren Enden eine Abstreiffläche 57 auf. Die Abstreiffläche 57 verläuft im eingefahrenen Zustand des Stempels 56, d.h. wenn sich der Flansch des Stempels 56 in anstoßender Beziehung mit dem Bereich der Kuppel 54 um die kreisförmige Öffnung herum befindet, bündig mit dem Bodenabschnitt 52 des Fruchthalters 50 und wird durch Führungsstangen 55 geführt, die von der Unterseite der Kuppel 54 senkrecht zum Bodenabschnitt 52 hin abwärts verlaufen und durch entsprechende Löcher in der Abstreiffläche 57 des Stempels 56 geführt sind, wie sich dies Figur 5b entnehmen lässt. Auf der Unterseite der Abstreiffläche 57 des Stempels ist eine Vielzahl von kleinen, beispielsweise kegelförmigen Dornen angeordnet, um das Schneidgut besser mit dem Fruchthalter 50 aufnehmen und halten zu können. Insbesondere für die Verwendung mit länglichem Schneidgut bildet der Bodenabschnitt 52 zusammen mit dem Randabschnitt 53 des Fruchthalters 50 an dessen Seiten zwei Aussparungen 58a und 58b aus. In diesen Aussparungen 58a und 58b sind ebenfalls mehrere kleine kegelförmige Dornen angeordnet, um ein längliches Schneidgut in diesen in Eingriff nehmen zu können. Dabei verläuft bei der Aussparung 58a der Randabschnitt 53 über einen Quergrat 59 bis zu der von dem Bodenabschnitt 58 gebildeten Ebene, während die Aussparung 58b so ausgestaltet ist, dass ein längliches Schneidgut mit dem Fruchthalter 50 aufgenommen werden kann, von der Abstreiffläche 57, der Aussparung 58a und der Aussparung 58b gehalten werden kann über die Aussparung 58b und den Randabschnitt 53 hinaus abstehen kann (mit anderen Worten: die Aussparung 58b weist keinen Quergrat auf). Dabei stößt das Schneidgut vorzugsweise an den Quergrat 59 in der Aussparung 58a an, so dass bei einer Verwendung des Fruchthalters 50 mit dem darin aufgenommenen Schneidgut mit dem Küchenhobel 10, wobei die Schneidrichtung der Richtung von der Aussparung 58a mit Quergrat 59 zu der Aussparung 58b ohne Quergrat entspricht, einer durch das Schneiden auf das Schneidgut ausgeübten Kraft entgegen gewirkt wird, die der Schneidrichtung entgegen gesetzt ist und danach trachtet, das Schneidgut von dem Fruchthalter 50 los zu machen.

Die Figuren 6a und 6b zeigen eine Aufnahme- oder Ablagevorrichtung 60 für die Einsätze 20, 30, 40 sowie den Fruchthalter 50. Die Ablagevorrichtung 60 besteht im Wesentlichen aus mehreren übereinander angeordneten Ablageplatten 62, die eine ähnliche Form wir die Einsatze aufweisen, dabei jedoch größer sind, so dass die Einsätze auf diesen Ablageplatten 62 abgelegt werden können. Die Ablageplatten 62 sind über vier Trägerstangen 64 derart miteinander verbunden, dass der vertikale Abstand zwischen zwei benachbarten Ablageplatten 62 ausreichend ist, dass ein Einsatz zwischen diese in die Ablagevorrichtung 60 eingebracht werden kann, wie sich dies der Figur 6b entnehmen lässt. Sobald ein Einsatz in die Ablagevorrichtung 60 eingebracht ist, stößt dieser mit seinem vorderen Ende an die zwei vorderen Trägerstangen 64 und zwei seitlich daran anschließende Anstoßflächen 66 an. Die zwei hinteren Trägerstangen 64 der Ablagevorrichtung 60 sind in einem solchen Abstand zueinander angeordnet, dass beim Einbringen eines Einsatzes zunächst die Arretierungsstifte des jeweiligen Einsatzes nach innen gedrückt werden, um sodann, sobald der Einsatz weiter in die Ablagevorrichtung 60 eingebracht worden ist und die Arretierungsstifte nicht mehr die zwei hinteren Trägerstangen 64 berühren, aufgrund der Vorspannkraft durch die Vorspannmittel wieder in die ausgefahrene Position bewegt zu werden und somit den Einsatz in der Ablagevorrichtung 60 zu fixieren. Wie im Fall der Entnahme eines in den erfindungsgemäßen Hobel 10 eingesetzten Einsatzes muss lediglich das Löseelement des Einsatzes betätigt werden, um diesen aus der Ablagevorrichtung 60 zu entnehmen.

Auf der Oberseite der obersten Ablageplatte 62 der Ablagevorrichtung 60 sind Elemente vorgesehen, die eine Anbringung des Fruchthalters 50 an der Ablagevorrichtung 60 ermöglichen. Hierzu weist die Oberseite der obersten Ablageplatte 62 der Ablagevorrichtung 60 drei Anstoßflächen 67 auf, die eine Fläche begrenzen, die der Form des Randabschnitts 53 des Fruchthalters 50 entspricht. Ferner weist die Oberseite der obersten Ablageplatte 62 der Ablagevorrichtung 60 zwei Fixierungsstifte 68 sowie zwei Fixierungsaussparungen 69 auf. Beim Aufbringen des Fruchthalters 50 auf die Ablagevorrichtung 60 wirken die zwei Fixierungsstifte 68 mit entsprechenden Löchern in dem Bodenabschnitt 52 des Fruchthalters 50 zusammen, und die zwei Fixierungsaussparungen 69 wirken mit den Führungsstangen 55 des Fruchthalters 50 zusammen, so dass der Fruchthalter 50 auf der Ablagevorrichtung 60 fixiert wird und der Stempel 56 des Fruchthalters 50 ein wenig aus seiner eingefahrenen Position heraus nach oben bewegt wird. Dabei werden die Fixierungsaussparungen 69 beispielsweise durch zwei zylindrische Hülsen ausgebildet, die mit einem geeignet gewählten Innendurchmesser die Führungsstangen 55 des Fruchthalters 50 in Eingriff nehmen. Um den Fruchthalter 50 von der Ablagevorrichtung 60 loszumachen muss ein Anwender lediglich auf den oberen Flansch des Stempels 56 des Fruchthalters 50 ein wenig Druck ausüben.

Anhand der vorstehend beschriebenen Ausführungsformen erkennt der Fachmann, dass auf der Basis des erfindungsgemäßen Küchenhobels weitere vorteilhafte Ausgestaltungen verwirklicht werden können. Insbesondere erkennt der Fachmann, dass weitere Einsätze, beispielsweise mit einer anderen Anzahl und einer anderen Höhe von hochstehenden Messern, für die Verwendung mit dem erfindungsgemäßen Küchenhobel geeignet sind, die die Verriegelungseinrichtung und die Führungsnuten aufweisen. Ferner ist es vorstellbar, dass anstatt des hier beschriebenen Küchenhobels 10 mit einem V-Messer 16 ein Küchenhobel mit einem zur Richtung des Schneidehubs quer verlaufenden Messer mit einem Einsatz verwendet wird, der das Messer abdeckt und schützt und gleichzeitig den Küchenhobel als Reibe einsetzbar macht. Hierbei ist es ferner vorstellbar, dass zusätzlich zu der Schutzfunktion auch eine andere Funktion zur Verarbeitung von Lebensmitteln anstatt einer Reibefunktion durch den Einsatz bereitgestellt wird. Schließlich wird der Fachmann erkennen, dass die hierin verwendeten Begriffe, wie "oben" bzw. "unten", "vorne" bzw. "hinten" und dergleichen, nicht dazu gedacht sind, die Orientierung der dadurch näher gekennzeichneten Elemente in irgendeiner Weise zu beschränken, sondern lediglich dazu dienen, diese Elemente von einander zu unterscheiden.

## Patentansprüche

1. Küchenhobel (10) zum Schneiden von Schneidgut, wie Obst, Gemüse und dergleichen, wobei der Küchenhobel umfasst:
eine Basisplatte (12), an der ein Messer (16) festgelegt ist und die eine Auslauffläche ausbildet wobei es sich bei dem Messe (16) um ein V-Messer oder ein zur Michtung das Schneihubs quer Verlaufunder Messer handelt;
zwei Längsträger (13a, 13b), die die Basisplatte (12) seitlich begrenzen und stabilisieren; und
einen auswechselbaren Einsatz (20), der im eingesetzten Zustand das Messer (16) abdeckt **dadurch gekennzeichnet daß** der auswechselbare Einsatz im eingesetzten Zustand zusatclich die Funktion einer Reibe oder eine andere Funktion zur Verarbeitung von Lebensmitteln aufweist.

2. Küchenhobel (10) nach Anspruch 1, wobei der Einsatz (20) als Reibe ausgestaltet ist und eine Vielzahl von Längs- und Querstreben aufweist, die eine Vielzahl von Löchern in dem Einsatz (20) ausbilden, und wobei auf den Querstreben Vorsprünge ausgebildet sind, die eine Reibefläche ausbilden.

3. Küchenhobel (10) nach Anspruch 1, wobei der Einsatz (20) zwei seitliche Führungsnuten (26a, 26b) aufweist.

4. Küchenhobel (10) nach Anspruch 1, wobei der Einsatz (20) eine Verriegelungseinrichtung umfasst.

5. Küchenhobel (10) nach Anspruch 4, wobei die Verriegelungseinrichtung Vorspannmittel, zwei seitliche Arretierungsstifte (29a, 29b) und ein Löseelement (28) umfasst, wobei die Arretierungsstifte (29a, 29b) in einem ausgefahrenen Zustand vorgespannt sind.

6. Küchenhobel (10) nach Anspruch 1, wobei der Einsatz (20) an der Unterseite einen Vorsprung (22) aufweist.

7. Küchenhobel (10) nach Anspruch 5, wobei an den Innenseiten der Längsträger (13a, 13b) Aussparungen (18a, 18b) vorgesehen sind, in die die Arretierungsstifte (29a, 29b) des Einsatzes (20) im eingesetzten Zustand eingreifen können.

8. Küchenhobel (10) nach Anspruch 1, wobei an den Innenseiten der Längsträger (13a, 13b) Führungsfedern (19a, 19b) ausgebildet sind, die an ihrem unteren Ende jeweils in einem Stopperelement enden.

9. Küchenhobel (10) nach Anspruch 1, wobei die zwei Längsträger (13a, 13b) über zwei Querstege (17a, 17b) miteinander verbunden sind, die als Auflagefläche für den Einsatz (20) dienen können.

10. Küchenhobel (10) nach Anspruch 1, wobei die zwei Längsträger (13a, 13b) an ihrem oberen Ende einen Griff (14) ausbilden.

11. Küchenhobel (10) nach Anspruch 1, wobei der Küchenhobel (10) einen weiteren Einsatz (30) zum Schneiden von Scheiben aufweist.

12. Küchenhobel (10) nach Anspruch 11, wobei der Einsatz (30) zum Schneiden von Scheiben zwei seitliche Führungsnuten (36a, 36b) aufweist.

13. Küchenhobel (10) nach Anspruch 11, wobei der Einsatz (30) zum Schneiden von Scheiben eine Verriegelungseinrichtung umfasst.

14. Küchenhobel (10) nach Anspruch 13, wobei die Verriegelungseinrichtung des Einsatzes (30) zum Schneiden von Scheiben Vorspannmittel, zwei seitliche Arretierungsstifte (39a, 39b) und ein Löseelement (38) umfasst, wobei die Arretierungsstifte (39a, 39b) in einem ausgefahrenen Zustand vorgespannt sind.

## Claims

1. Kitchen slicer (10) for cutting foodstuff, such as fruits, vegetables and the like, the kitchen slicer comprising:
a base plate (12), wherein a knife (16) is affixed to the base plate (12) and the base plate (12) forms an exit surface, wherein the knife (16) is a V-shaped knife or a knife extending perpendicularly to the direction of the cutting action;
two longitudinal support elements (13a, 13b) that stabilize and limit the base plate (12) laterally; and
a removable insert (20) that, when inserted, covers the knife (16),
**characterized in that** the removable insert (20), when inserted, additionally provides the function of a grater or another function for processing foodstuff.

2. The kitchen slicer (10) of claim 1, wherein the insert (20) is configured as a grater and comprises a plurality of longitudinal and transversal braces, which form a plurality of holes in the insert (20), and wherein protrusions are formed on the transversal braces that form a grating surface.

3. The kitchen slicer (10) of claim 1, wherein the insert (20) comprises two lateral guiding grooves (26a, 26b).

4. The kitchen slicer (10) of claim 1, wherein the insert (20) comprises a locking device.

5. The kitchen slicer (10) of claim 4, wherein the locking device comprises biasing means, two lateral locking pins (29a, 29b) and a release element (28), wherein the locking pins (29a, 29b) are biased into an extended position.

6. The kitchen slicer (10) of claim 1, wherein the insert (20) comprises a protrusion (22) on its bottom surface.

7. The kitchen slicer (10) of claim 5, wherein recesses (18a, 18b) are provided on the inside surfaces of the longitudinal support elements (13a, 13b), wherein the locking pins (29a, 29b) of the insert (20), when inserted, can engage the recesses (18a, 18b).

8. The kitchen slicer (10) of claim 1, wherein guiding tongues (19a, 19b) are formed on the inside surfaces of the longitudinal support elements (13a, 13b) that terminate at their respective lower end in a stopper element.

9. The kitchen slicer (10) of claim 1, wherein the two longitudinal support elements (13a, 13b) are connected by two transversal bars (17a, 17b) that can serve as the support surface for the insert (20).

10. The kitchen slicer (10) of claim 1, wherein the two longitudinal support elements (13a, 13b) form a handle (14) at their upper ends.

11. The kitchen slicer (10) of claim 1, wherein the kitchen slicer (10) comprises a further insert (30) for cutting slices.

12. The kitchen slicer (10) of claim 11, wherein the insert (30) for cutting slices comprises two lateral guiding grooves (36a, 36b).

13. The kitchen slicer (10) of claim 11, wherein the insert (30) for cutting slices comprises a locking device.

14. The kitchen slicer (10) of claim 13, wherein the locking device of the insert (30) for cutting slices comprises biasing means, two lateral locking pins (39a, 39b) and a release element (38), wherein the locking pins (39a, 39b) are biased into an extended position.

## Revendications

1. Rabot de cuisine (10) destiné à couper des matières à trancher telles que fruits, légumes et autres, dans lequel le rabot de cuisine comporte:
une plaque de base (12), à laquelle est fixée une lame (16) et qui forme une surface de décharge, tandis qu'en ce qui concerne la lame (16) il s'agit d'une lame en V ou d'une lame transversale par rapport à la direction de la course de coupe;
deux longerons (13a, 13b), qui limitent latéralement et stabilisent la plaque de base (12); et
une pièce amovible interchangeable (20), qui lorsqu'elle est insérée recouvre la lame (16),
**caractérisé en ce que** la pièce amovible interchangeable remplit en outre, lorsqu'elle est introduite, la fonction d'une râpe ou une autre fonction de traitement de produits alimentaires.

2. Rabot de cuisine (10) selon la revendication 1, dans lequel l'insert (20) est agencé comme un rabot et présente une pluralité d'entretoises longitudinales et transversales, qui définissent une pluralité de trous dans l'insert (20), et tandis que sur les entretoises transversales sont prévues des saillies qui forment une surface de rabotage.

3. Rabot de cuisine (10) selon la revendication 1, dans lequel l'insert (20) présente deux rainures de guidage latérales (26a, 26b).

4. Rabot de cuisine (10) selon la revendication 1, dans lequel l'insert (20) comprend un dispositif de verrouillage.

5. Rabot de cuisine (10) selon la revendication 4, dans lequel le dispositif de verrouillage comprend des moyens de précontrainte, deux chevilles d'arrêt latérales (29a, 29b) et un élément de dégagement (28), tandis que les chevilles d'arrêt (29a, 29b) sont précontraintes à l'état sorti.

6. Rabot de cuisine (10) selon la revendication 1, dans lequel l'insert (20) présente sur sa face inférieure une saillie (22).

7. Rabot de cuisine (10) selon la revendication 5, dans lequel sont prévues, sur les faces internes des longerons (13a, 13b), des rainures (18a, 18b), dans lesquelles les chevilles d'arrêt (29a, 29b) de l'insert (20) peuvent s'insérer lors du montage.

8. Rabot de cuisine (10) selon la revendication 1, dans lequel sont formées, sur les faces internes des longerons (13a, 13b), des glissières de guidage (19a, 19b), qui se terminent à leur extrémité inférieure à chaque fois par un élément formant butée.

9. Rabot de cuisine (10) selon la revendication 1, dans lequel les deux longerons (13a, 13b) sont reliés entre eux par l'intermédiaire de deux traverses (17a, 17b) qui peuvent servir de surface d'appui pour l'insert (20).

10. Rabot de cuisine (10) selon la revendication 1, dans lequel les deux longerons (13a, 13b) forment à leur extrémité supérieure une poignée (14).

11. Rabot de cuisine (10) selon la revendication 1, dans lequel le rabot de cuisine (10) possède un autre insert (30) pour la découpe de tranches.

12. Rabot de cuisine (10) selon la revendication 11, dans lequel l'insert (30) présente pour la découpe de tranches deux rainures de guidage latérales (36a, 36b).

13. Rabot de cuisine (10) selon la revendication 11, dans lequel l'insert (30) comprend pour la découpe de tranches un dispositif de verrouillage.

14. Rabot de cuisine (10) selon la revendication 13, dans lequel le dispositif de verrouillage de l'insert (30) comprend, pour la découpe de tranches, des moyens de précontrainte, deux chevilles d'arrêt latérales (39a, 39b) et un élément de dégagement (38), tandis que les chevilles d'arrêt (39a,39b) sont précontraintes à l'état sorti.
